# EUROPÄISCHE PATENTSCHRIFT

(11) **EP 1 627 967 B1**
(45) Veröffentlichungstag und Bekanntmachung des Hinweises auf die Patenterteilung: **06.01.2016**
(21) Anmeldenummer: 05017541.3
(22) Anmeldetag: 11.08.2005
(51) Int. Cl.: A62C 2/06, E03F 5/04, F16L 5/04

(54) **Ablaufvorrichtung zur Montage in einer Boden-oder Deckenöffnung**
Drainage device for floor or intermediate floor
Dispositif d'écoulement pour plancher ou plancher intermédiaire

(30) Priorität: 17.08.2004 DE 102004039952
(43) Veröffentlichungstag der Anmeldung: 22.02.2006
(73) Patentinhaber: Dallmer GmbH & Co. KG, 59757 Arnsberg (DE)
(72) Erfinder: Dallmer, Johannes, 59757 Arnsberg (DE)
(74) Vertreter: Basfeld, Rainer

(56) Entgegenhaltungen:
- EP-A- 1 229 175
- EP-A- 1 362 961
- DE-A1- 10 113 371
- DE-A1-102004 007 454

## Beschreibung

Die vorliegende Erfindung betrifft eine Ablaufvorrichtung gemäß dem Oberbegriff des Anspruchs 1.

Derartige Ablaufvorrichtungen sind aus der EP 1 362 961 A1 bekannt. Als nachteilig bei diesen Ablaufvorrichtungen ist anzusehen, dass in der Regel die Brandschutzmasse derart in der Ablaufvorrichtung angeordnet ist, dass sie das Rohrstück von außen umgibt. Dies kann im Brandfall zu einem vergleichsweise langsamen Schließen der Boden- oder Deckenöffnung führen. Eine andere lösung mit einer Brandschutzmasse ist in EP 1 229 175 A vorgeschlagen.

Es gibt zwar bei Abläufen im Innern des Rohrstückes angebrachte Brandschutzeinlagen. Diese weisen jedoch den Nachteil auf, dass sie mit Abwasser in Berührung kommen und dadurch Schaden nehmen können.

Das der vorliegenden Erfindung zugrundeliegende Problem ist die Schaffung einer Ablaufvorrichtung der eingangs genannten Art, bei der die Brandschutzmasse zu dem effektiven Verschließen der Öffnung beitragen kann und nicht oder nur in sehr geringem Maße mit Abwasser in Berührung kommen kann.

Dies wird erfindungsgemäß durch eine Ablaufvorrichtung der eingangs genannten Art mit den kennzeichnenden Merkmalen des Anspruchs 1 erreicht. Die Unteransprüche betreffen vorteilhafte Ausgestaltungen der Erfindung.

Gemäß Anspruch 1 ist vorgesehen, dass die Brandschutzmittel Anbringmittel umfassen, die die Brandschutzmasse in einer ersten Position halten, in der die Brandschutzmasse oberhalb des Rohrstücks oder oberen Bereich des Rohrstücks gehalten wird, so dass sie in einem Bereich angeordnet ist, der nicht oder nur in sehr geringem Maße mit Abwasser in Berührung kommen kann, wobei bei einer Temperatur oberhalb einer vorgegebenen Temperatur die Anbringmittel die Brandschutzmasse freigeben können, so dass diese in eine zweite Position im Inneren des Rohrstücks unterhalb der ersten Position überführt wird, wobei die Brandschutzmasse in der zweiten Position die Boden- oder Deckenöffnung zumindest teilweise verschließen kann, und wobei das Rohrstück und die Brandschutzmasse derart ausgebildet sind, dass die Brandschutzmasse in der zweiten Position das Rohrstück nach außen drücken beziehungsweise zerquetschen kann bis die gesamte Öffnung unterhalb des Bodens des Ablauftopfes mit Brandschutzmasse gefüllt und damit brandschutztechnisch verschlossen ist. Durch diese Maßnahme wird die Brandschutzmasse nur im Brandfall in einen Bereich gelangen, in dem sie die Boden- oder Deckenöffnung zumindest teilweise verschließen kann. Vor dem Eintritt des Brandfalls ist die Brandschutzmasse in einem Bereich angeordnet, der nicht oder nur in sehr geringem Maße mit Abwasser in Berührung kommen kann.

Gemäß einer bevorzugten Ausführungsform kann vorgesehen sein, dass die zweite Position der Brandschutzmasse unterhalb des Bodens des Ablauftopfes ist. Dadurch befindet sich die Brandschutzmasse in der zweiten Position an einer Stelle, die ideal zur Verschließung der Öffnung im Brandfall geeignet ist.

Es kann insbesondere vorgesehen sein, dass die Brandschutzmasse und/oder ein die Brandschutzmasse haltendes Teil zumindest zeitweise in der zweiten Position von einem Verbindungselement gehalten werden. Dadurch kann gewährleistet werden, dass die Brandschutzmasse nach Überführung in die zweite Position zumindest einige Zeit in dieser Position verbleibt und dort aufschäumt.

Weiterhin besteht die Möglichkeit, dass die Ablaufvorrichtung einen Geruchsverschluss umfasst, wobei die Brandschutzmasse in der ersten Position in oder an dem Geruchsverschluss angeordnet ist. Beispielsweise kann dabei der Geruchsverschluss eine oberhalb des Rohrstückes angeordnete Glocke umfassen, wobei die Brandschutzmasse in der ersten Position an der oberen Innenseite der Glocke angebracht ist. Die obere Innenseite dieser Glocke wird im normalen Betrieb der Ablaufvorrichtung nicht mit Abwasser in Berührung kommen, so dass die Brandschutzmasse keinen Schaden nehmen kann.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine eingemörtelte erfindungsgemäße Ablaufvorrichtung mit einer Brandschutzmasse in einer ersten Position;
- Fig. 2: die Ablaufvorrichtung gemäß Fig. 1 mit der Brandschutzmasse in einer zweiten Position,
- Fig. 3: eine erste Ausführungsform einer nur teilweise eingemörtelten erfindungsgemäßen Ablaufvorrichtung mit einer Brandschutzmasse in einer ersten Position;
- Fig. 4: eine zweite Ausführungsform einer nur teilweise eingemörtelten erfindungsgemäßen Ablaufvorrichtung mit einer Brandschutzmasse in einer ersten Position;
- Fig. 5: eine Brandschutzeinheit, wie sie in ähnlicher Form in eine erfindungsgemäße Ablaufvorrichtung integriert werden kann.

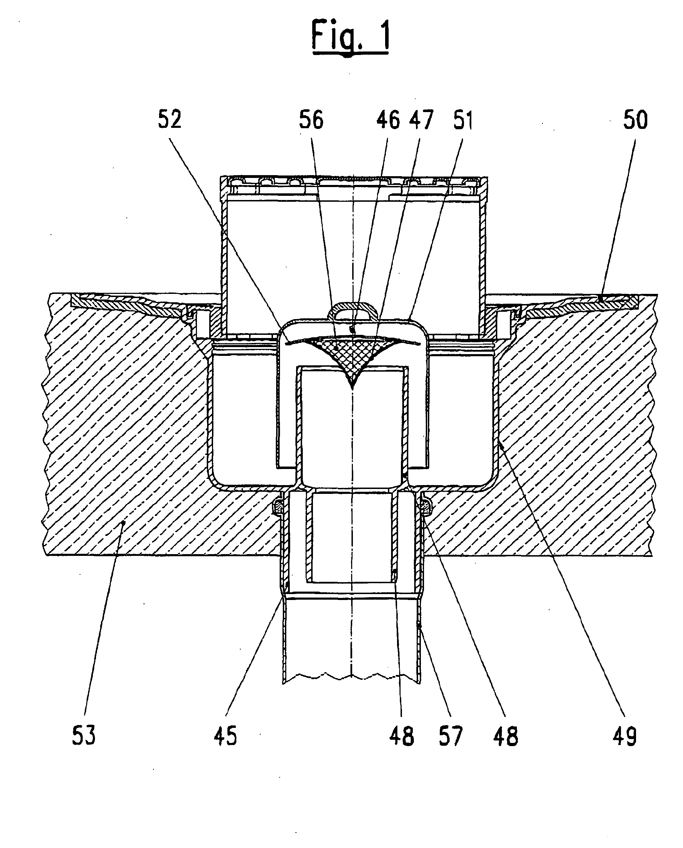

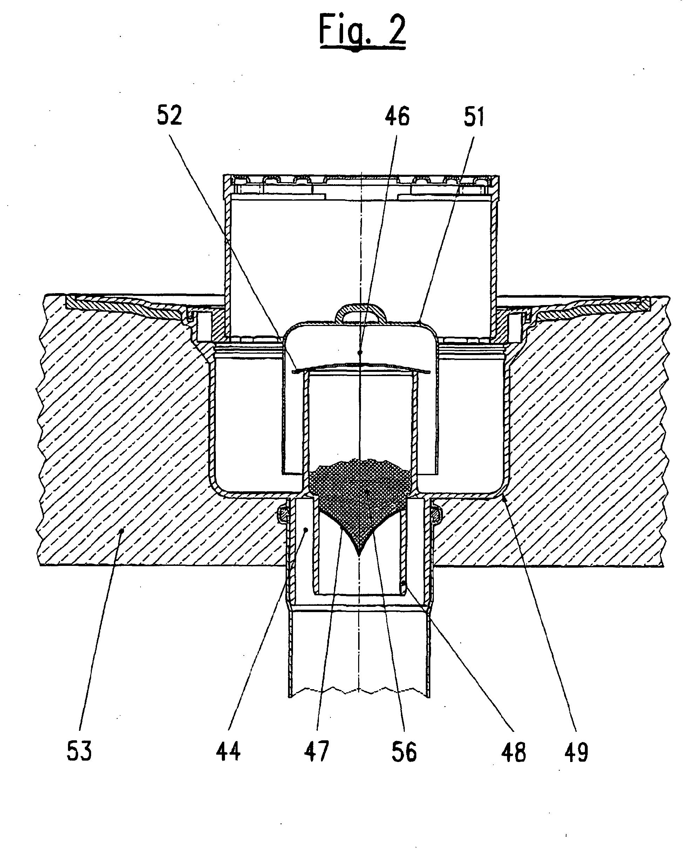

Zuerst wird auf Fig. 1 und Fig. 2 Bezug genommen. Die darin abgebildete erfindungsgemäße Ablaufvorrichtung ist in eine Öffnung in einem Boden oder einer Decke 53 eingebaut, wobei die Ablaufvorrichtung einen Ablauftopf 49 mit einem oberen umlaufenden Flansch 50 umfasst. Einstückig mit dem Ablauftopf ist in dem abgebildeten Ausführungsbeispiel ein als Rohrstutzen ausgeführtes Rohrstück 48 verbunden, das strömungstechnisch mit dem Ablauftopf 49 verbunden ist. An das Rohrstück 48 kann im unteren Bereich ein weiterführendes Rohr 57 angebracht werden. Im abgebildeten Ausführungsbeispiel ist an der Unterseite des Ablauftopfes 49 ein weiterer äußerer Rohrstutzen 45 angeformt, an dem das weiterführende Rohr 57 angebracht ist.

Oberhalb des in den Ablauftopf 49 hineinragenden Abschnitt des Rohrstückes 48 ist eine Glocke 51 angeordnet, die so weit zwischen oberem Abschnitt des Rohrstücks 48 und Ablauftopf 49 heruntergezogen ist, dass ein Geruchsverschluss durch zwischen Ablauftopf 49, unterem Rand der Glocke 51 und oberem Abschnitt des Rohrstutzen stehendes Wasser gebildet wird. Der Ablauftopf 49, das Rohrstück 48 und die Glocke 51 können dabei aus Kunststoff bestehen.

Oberhalb des Rohrstücks 48 sind an der Unterseite der Glocke Brandschutzmittel angebracht, die eine Brandschutzmasse 56 umfassen, die bei einer erhöhten Temperatur unter Volumenausdehnung aufschäumen kann. Es kann sich bei dieser Brandschutzmasse 56 um einen sogenannten Intumeszenz-Schaumstoff handeln. Die Brandschutzmasse 56 ist in dem abgebildeten Ausführungsbeispiel oberhalb eines gewölbten Metallteils 47 angebracht. Dieses Metallteil 47 kann auch tellerähnlich ausgebildet sein. Die gewölbte Form der abgebildeten Ausführungsform kann als Umlenkmittel für durch die Glocke 51 und das Rohrstück 48 hindurchströmendes Wasser dienen.

Die Brandschutzmasse 56 und gegebenenfalls auch das gewölbte Metallteil 47 sind über nicht dargestellte Anbringmittel an der Unterseite der Glocke 51 angebracht. Diese Anbringmittel geben die Brandschutzmasse und gegebenenfalls auch das Metallteil 47 bei einer Temperatur oberhalb einer vorgegebenen Temperatur frei, so dass die Brandschutzmasse 56 zusammen mit dem Metallteil 47 nach unten in das Rohrstück 48 fallen kann.

Bei den Anbringmitteln kann es sich beispielsweise um einen Kleber handeln, der nur bis zu einer bestimmten Temperatur Klebeeigenschaften hat und danach schmilzt oder dergleichen, so dass die Brandschutzmasse freigegeben wird. Alternativ dazu können die Anbringmittel auch aus einem Memorymetall oder einem Bimetall bestehen. Beispielsweise könnte bei der Verwendung eines Memorymetalls eine Feder aus Memorymetall gefertigt werden, die erst ab einer bestimmten Temperatur einen Druck ausübt, wobei dieser Druck dann so stark sein kann, dass er zusätzliche Klebemittel oder dergleichen löst, so dass die Brandschutzmasse 56 nach unten fallen kann. Alternativ dazu könnten die Anbringmittel einen O-Ring umfassen, der in einer entsprechenden Ausnehmung aufgenommen ist und ebenfalls die Brandschutzmasse 56 bzw. das Metallteil 47 hält. Wenn die Temperatur über eine bestimmte Temperatur steigt, schrumpft der O-Ring derart, dass die Kraft, mit der der O-Ring an der Innenseite der Ausnehmung anliegt, nicht mehr ausreicht, um die Brandschutzmasse 56 zu halten, so dass sie herunterfällt. Alternativ kann das Verbindungselement auch als Schmelzlot ausgeführt sein, das oberhalb einer bestimmten Temperatur die Brandschutzmasse oder das Metallteil freigibt.

Die Brandschutzmasse 56 und/oder das Metallteil 47 sind mit dem oberen Bereich der Glocke 51 zusätzlich durch ein Verbindungselement 46 verbunden. Bei diesem Verbindungselement 46 kann es sich beispielsweise um eine Kette oder eine Schnur, beispielsweise um eine Schnur aus Glasfaser oder aus Metall oder dergleichen handeln. Aus Fig. 2 ist ersichtlich, dass das Verbindungselement 46 eine derartige Länge aufweist, dass in der zweiten Position die Brandschutzmasse 56 mit dem Metallteil 47 innerhalb des Rohrstücks 48 gehalten wird.

In einem Brandfall wird somit zuerst die Brandschutzmasse 56 von der Unterseite der Glocke 51 gelöst und fällt in das Rohrstück 48. In diesem Rohrstück 48 wird bei steigender Temperatur die Brandschutzmasse 56 derart aufschäumen, dass sie das Rohrstück 48 verschließt (Zustand in Fig. 2). Weiterhin wird die Brandschutzmasse weiter aufschäumen und das gegebenenfalls schmelzende Rohrstück 48 nach außen drücken bzw. zerquetschen, bis die gesamte Öffnung 44 unterhalb des Bodens des Ablauftopfes 49 mit Brandschutzmasse gefüllt und damit brandschutztechnisch verschlossen ist.

Auf diese Weise kann eine vergleichsweise lange Zeit verhindert werden, dass Feuer und Rauch von unten in das darüber gelegene Stockwerk durch die Ablaufvorrichtung nach oben durchdringen. Es besteht durchaus die Möglichkeit, dass die Brandschutzmasse 56 und das Metallteil 47 ein Stück weiter unten oder oben als in Fig. 2 abgebildet in dem Rohrstück 48 von dem Verbindungselement 46 aufgefangen werden.

Die Brandschutzmasse 56 fällt im Brandfall innerhalb kürzester Zeit, d. h. beispielsweise in Sekundenschnelle, an die vorgegebene Position. Dadurch kann gegenüber dem Stand der Technik Zeit gewonnen und Brandschutzmasse 56 eingespart werden, weil die Brandschutzmasse 56 an der gewünschten Stelle des Rohrstücks 48 expandiert.

Die Brandschutzmittel können weiterhin ein scheibenförmiges Teil 52 umfassen, das in der ersten in Fig. 1 gezeigten normalen Position oberhalb der Brandschutzmasse 56 und oberhalb des Metallteils 47 zusammen mit diesen an der Unterseite der Glocke 51 befestigt ist. Beispielsweise kann die Oberseite des Teils 52 (entgegen der Abbildung gemäß Fig. 1) an der Unterseite der Glocke 51 anliegend mit dieser verbunden sein. Im Brandfall, wenn die Brandschutzmasse 56 herunterfällt, fällt auch das scheibenförmige Teil 52 mit herunter und deckt die obere Öffnung des Rohrstücks 48 in dem Ablauftopf 49 ab (siehe Fig. 2). Dadurch kann auch schon während des Aufschäumens der Brandschutzmasse 56 verhindert werden, dass beispielsweise Rauch durch das Rohrstück 48 nach oben aus der Ablaufvorrichtung herausdringt.

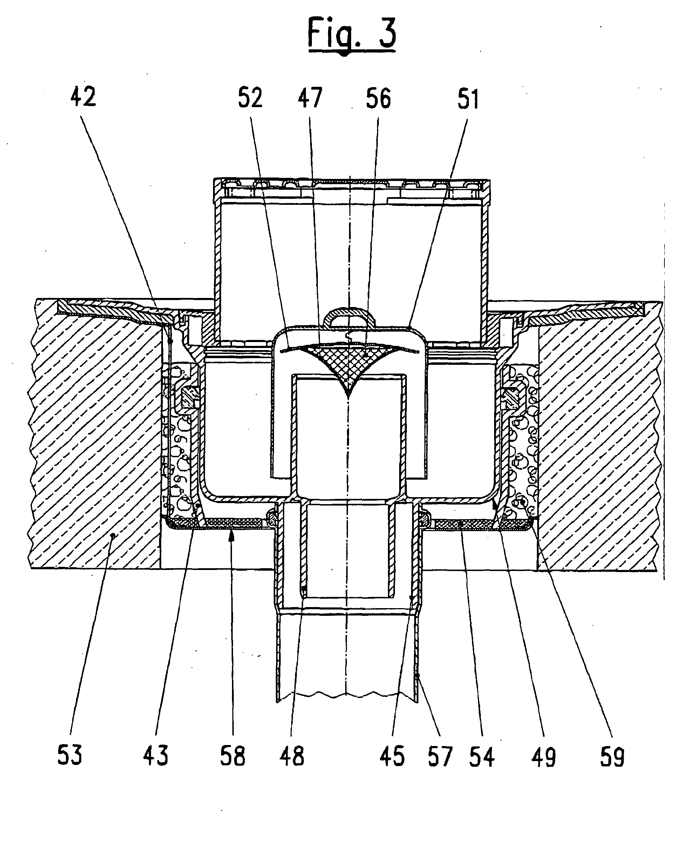

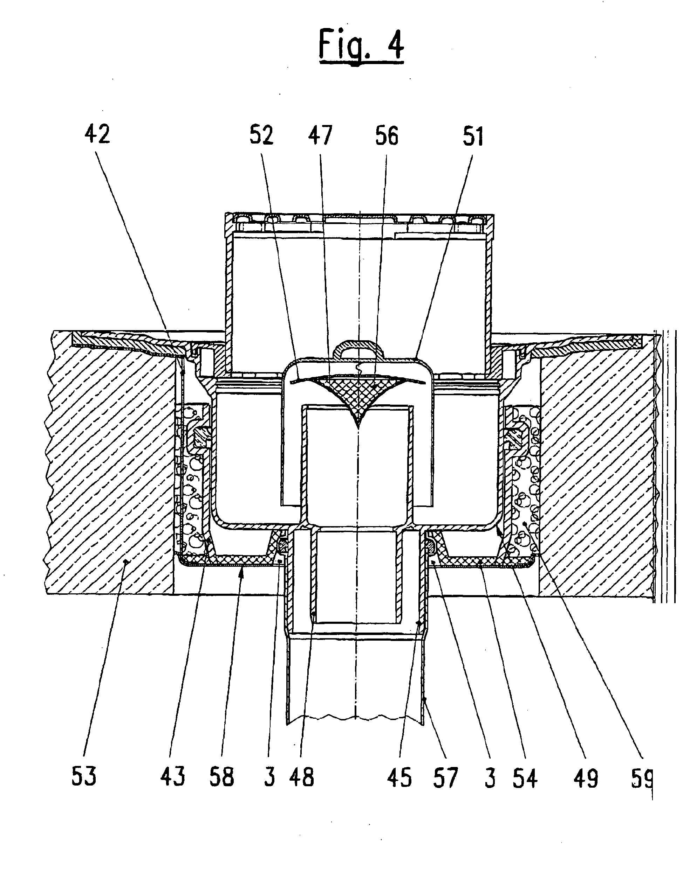

Bei der Ausführungsform gemäß Fig. 1 und Fig. 2 ist Mörtel 59 auch unterhalb des Bodens des Ablauftopfes 49 vorgesehen. Bei der Ausführungsform gemäß Fig. 3 und Fig. 4, bei der gleiche Teile mit gleichen Bezugszeichen versehen sind, ist die Bohrung für die Aufnahme der Ablaufvorrichtung größer, so dass unterhalb des Ablauftopfes 49 bzw. des Bodens des Ablauftopfes 49 kein Mörtel 59 vorgesehen ist. Bei dieser Ausführungsform ist das Rohrstück 48 im Bereich unterhalb des Ablauftopfes 49 von einer Brandschutzeinheit 58 umgeben, die im wesentlichen aus einem tellerförmigen Metallteil besteht, das auf seiner oberen Seite ebenfalls mit Brandschutzmasse 54 bedeckt ist. Diese Brandschutzmasse kann sich im Brandfall ebenfalls ausdehnen, und zwar radial nach innen, so dass der Zwischenraum zwischen dem Rohrstück 48 und dem radial inneren Rand des Mörtels 59 von Brandschutzmasse 54 abgedeckt wird. In dem abgebildeten Ausführungsbeispiel ist noch das Rohrstück 45 ersichtlich, das zur Anbringung des weiterführenden Rohres 57 dient. Dieses Rohrstück 45 kann jedoch im Brandfall von der Brandschutzmasse 54 zusammengequetscht werden.

Auf der Oberseite des tellerförmigen Metallteils ist in die Brandschutzmasse 54 ein Rohrstutzen 43 eingebracht, der den Ablauftopf 49 umgibt und haltert. Weiterhin können an der Brandschutzeinheit Bügel 42 zur Halterung in der Deckenöffnung angebracht sein.

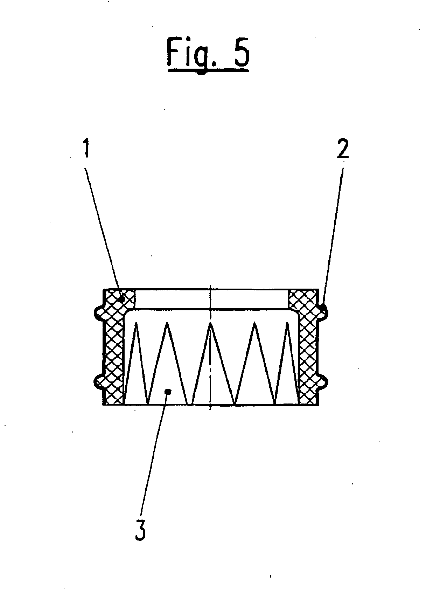

Die Brandschutzeinheit 58 gemäß Fig. 4 kann insbesondere Halteteile 3 aufweisen, die beispielsweise zackenförmig ausgebildet sind oder andere Geometrien aufweisen können. In Fig. 5 ist beispielhaft eine ähnliche Brandschutzeinheit 2 mit einer Brandschutzmasse 1 abgebildet, die ebenfalls zackenförmige Halteteile 3 aufweist. Im Brandfall können diese Halteteile 3 von der aufschäumenden Brandschutzmasse 1 derart radial nach innen gedrückt werden, dass sie eine im wesentlichen geschlossene horizontale Fläche bilden, durch die die Brandschutzmasse 1 bzw. bei der Ausführungsform gemäß Fig. 4 die Brandschutzmasse 54 nicht nach unten heraustropfen kann. Auf diese Weise wird ein sicherer Verschluss zwischen dem Rohrstück 48 und dem inneren Rand der Mörtelmasse bzw. dem inneren Rand der Kernbohrung erreicht.

Als wesentlicher Vorteil der vorbeschriebenen Ablaufvorrichtungen ist anzusehen, dass die Brandschutzmasse sowohl in ihrem Befestigungszustand unter der Glocke 51 als auch im Bereich radial außerhalb des Rohrstücks 48 nicht mit Abwasser in Berührung kommt und somit auch nicht angelöst werden kann.

Weiterhin kann aufgrund der Tatsache, dass der Verschluss innerhalb des Rohrstücks 48 stattfindet, an das untere Ende des Rohrstücks 48 mit beliebigen Mitteln ein beliebiges Rohr angebracht werden.
Weiterhin kann eine Glocke 51 mit erfindungsgemäßen Brandschutzmitteln in bestehenden Ablaufvorrichtungen nachgerüstet werden.

## Patentansprüche

1. Ablaufvorrichtung zur Montage in einer Boden- oder Deckenöffnung, umfassend
- einen Ablauftopf (49), der zumindest teilweise aus Kunststoff besteht;
- ein Rohrstück (48), das strömungstechnisch mit dem Ablauftopf (49) verbunden oder verbindbar ist, wobei Abwasser durch das Rohrstück (48) hindurchströmen kann;
- Brandschutzmittel mit einer bei einer erhöhten Temperatur aufschäumenden Brandschutzmasse;
**dadurch gekennzeichnet, dass**
- die Brandschutzmittel Anbringmittel umfassen, die die Brandschutzmasse (56) in einer ersten Position halten, in der die Brandschutzmasse (56) oberhalb des Rohrstücks (48) oder im oberen Bereich des Rohrstücks (48) gehalten wird, so dass sie in einem Bereich angeordnet ist, der nicht oder nur in sehr geringem Maße mit Abwasser in Berührung kommen kann, wobei bei einer Temperatur oberhalb einer vorgegebenen Temperatur die Anbringmittel die Brandschutzmasse (56) freigeben können, so dass diese in eine zweite Position im Inneren des Rohrstücks (48) unterhalb der ersten Position überführt wird, wobei die Brandschutzmasse in der zweiten Position die Boden- oder Deckenöffnung (44) zumindest teilweise verschließen kann, und wobei das Rohrstück (48) und die Brandschutzmasse (56) derart ausgebildet sind, dass die Brandschutzmasse (56) in der zweiten Position das Rohrstück (48) nach außen drücken beziehungsweise zerquetschen kann bis die gesamte Öffnung (44) unterhalb des Bodens des Ablauftopfes (49) mit Brandschutzmasse (56) gefüllt und damit brandschutztechnisch verschlossen ist.

2. Ablaufvorrichtung nach Anspruch 1, **dadurch gekennzeichnet, dass** das Rohrstück (48) im eingebauten Zustand der Ablaufvorrichtung zumindest abschnittsweise im Wesentlichen vertikal ausgerichtet ist.

3. Ablaufvorrichtung nach einem der Ansprüche 1 oder 2, **dadurch gekennzeichnet, dass** die zweite Position der Brandschutzmasse (56) unterhalb des Bodens des Ablauftopfes (49) ist.

4. Ablaufvorrichtung nach einem der Ansprüche 1 bis 3, **dadurch gekennzeichnet, dass** die Anbringmittel als Kleber, Memory- oder Bimetall, als O-Ring oder als Schmelzlot ausgeführt sind.

5. Ablaufvorrichtung nach einem der Ansprüche 1 bis 4, **dadurch gekennzeichnet, dass** die Brandschutzmasse (56) und/oder ein die Brandschutzmasse (56) haltendes Teil (47) zumindest zeitweise in der zweiten Position von einem Verbindungselement (46) gehalten wird.

6. Ablaufvorrichtung nach einem der Ansprüche 1 bis 5, **dadurch gekennzeichnet, dass** die Ablaufvorrichtung einen Geruchsverschluss umfasst, wobei die Brandschutzmasse (56) in der ersten Position in oder an dem Geruchsverschluss angeordnet ist.

7. Ablaufvorrichtung nach Anspruch 6, **dadurch gekennzeichnet, dass** der Geruchsverschluss eine oberhalb des Rohrstückes (48) angeordnete Glocke (51) umfasst, wobei die Brandschutzmasse (56) in der ersten Position an der oberen Innenseite der Glocke (51) angebracht ist.

8. Ablaufvorrichtung nach einem der Ansprüche 1 bis 7, **dadurch gekennzeichnet, dass** das Rohrstück (48) unterhalb des Bodens des Ablauftopfes (49) von einer Brandschutzeinheit (58) mit einer Brandschutzmasse (54) umgeben ist.

## Claims

1. Drainage device for mounting in an opening in a floor or ceiling, comprising
- a drainage pot (49), which consists at least partially of plastic;
- a piece of tube (48), which is connected or can be connected in terms of flow to the drainage pot (49), wastewater being able to flow through the piece of tube (48);
- fire prevention means with an intumescent compound that expands at an elevated temperature;
**characterized in that**
- the fire prevention means comprise attachment means, which keep the intumescent compound (56) in a first position, in which the intumescent compound (56) is kept above the piece of tube (48) or in the upper region of the piece of tube (48), so that it is arranged in a region that cannot come into contact with wastewater, or only to a very small extent, wherein, at a temperature above a predetermined temperature, the attachment means can release the intumescent compound (56), so that it is transferred into a second position, inside the piece of tube (48), below the first position, wherein the intumescent compound in the second position can at least partially close the opening (44) in a floor or ceiling, and wherein the piece of tube (48) and the intumescent compound (56) are formed in such a way that the intumescent compound (56) in the second position can press or force the piece of tube (48) outwards until the entire opening (44) underneath the bottom of the drainage pot (49) is filled with intumescent compound (56) and is thereby closed in terms of fire prevention.

2. Drainage device according to Claim 1, **characterized in that**, in the fitted state of the drainage device, at least certain sections of the piece of tube (48) are aligned substantially vertically.

3. Drainage device according to either of Claims 1 and 2, **characterized in that** the second position of the intumescent compound (56) is underneath the bottom of the drainage pot (49).

4. Drainage device according to one of Claims 1 to 3, **characterized in that** the attachment means take the form of an adhesive, a memory metal or bimetal, an 0-ring or a fusible solder.

5. Drainage device according to one of Claims 1 to 4, **characterized in that** the intumescent compound (56) and/or a part (47) holding the intumescent compound (56) is kept at least for a time in the second position by a connecting element (46).

6. Drainage device according to one of Claims 1 to 5, **characterized in that** the drainage device comprises a stench trap, wherein the intumescent compound (56) in the first position is arranged in or at the stench trap.

7. Drainage device according to Claim 6, **characterized in that** the stench trap comprises a bell (51) arranged above the piece of tube (48), wherein the intumescent compound (56) in the first position is provided on the upper inner side of the bell (51).

8. Drainage device according to one of Claims 1 to 7, **characterized in that** the piece of tube (48) underneath the bottom of the drainage pot (49) is surrounded by a fire prevention unit (58) with an intumescent compound (54).

## Revendications

1. Dispositif d'écoulement pour le montage dans une ouverture de plancher ou de plafond, comprenant :
- un pot d'écoulement (49) qui se compose au moins en partie de plastique ;
- une pièce tubulaire (48) qui est connectée ou peut être connectée par une technique fluidique au pot d'écoulement (49), les eaux usées pouvant s'écouler à travers la pièce tubulaire (48) ;
- des moyens de protection incendie comprenant une matière de protection incendie moussant à température élevée ;
**caractérisé en ce que**
- les moyens de protection incendie comprennent des moyens d'application qui retiennent la matière de protection incendie (56) dans une première position dans laquelle la matière de protection incendie (56) est retenue au-dessus de la pièce tubulaire (48) ou dans la région supérieure de la pièce tubulaire (48) de telle sorte qu'elle soit disposée dans une région qui ne peut pas venir en contact avec les eaux usées ou seulement dans une très faible mesure, les moyens d'application pouvant libérer la matière de protection incendie (56) à une température au-dessus d'une température prédéfinie, de telle sorte que celle-ci soit transférée dans une deuxième position à l'intérieur de la pièce tubulaire (48) en dessous de la première position, la matière de protection incendie, dans la deuxième position, pouvant fermer au moins en partie l'ouverture de plancher ou de plafond (44) et la pièce tubulaire (48) et la matière de protection incendie (56) étant réalisées de telle sorte que la matière de protection incendie (56), dans la deuxième position, puisse comprimer ou écraser la pièce tubulaire (48) vers l'extérieur jusqu'à ce que toute l'ouverture (44) en dessous du fond du pot d'écoulement (49) soit remplie avec la matière de protection incendie (56) et soit par conséquent fermée par une technique de protection incendie.

2. Dispositif d'écoulement selon la revendication 1, **caractérisé en ce que** la pièce tubulaire (48), dans l'état installé du dispositif d'écoulement, est orientée au moins en partie essentiellement verticalement.

3. Dispositif d'écoulement selon l'une quelconque des revendications 1 et 2, **caractérisé en ce que** la deuxième position de la matière de protection incendie (56) est en dessous du fond du pot d'écoulement (49).

4. Dispositif d'écoulement selon l'une quelconque des revendications 1 à 3, **caractérisé en ce que** les moyens d'application sont réalisés sous forme de colle, de métal à mémoire ou de bimétal, sous forme de joint torique ou sous forme de fusible.

5. Dispositif d'écoulement selon l'une quelconque des revendications 1 à 4, **caractérisé en ce que** la matière de protection incendie (56) et/ou une partie (47) retenant la matière de protection incendie (56) sont retenues au moins temporairement dans la deuxième position par un élément de liaison (46).

6. Dispositif d'écoulement selon l'une quelconque des revendications 1 à 5, **caractérisé en ce que** le dispositif d'écoulement comprend un coupe-odeur, la matière de protection incendie (56) étant disposée dans la première position dans ou sur le coupe-odeur.

7. Dispositif d'écoulement selon la revendication 6, **caractérisé en ce que** le coupe-odeur comprend une cloche (51) disposée au-dessus de la pièce tubulaire (48), la matière de protection incendie (56) étant montée dans la première position contre le côté intérieur supérieur de la cloche (51).

8. Dispositif d'écoulement selon l'une quelconque des revendications 1 à 7, **caractérisé en ce que** la pièce tubulaire (48) en dessous du fond du pot d'écoulement (49) est entourée par une unité de protection incendie (58) avec une matière de protection incendie (54).
